# EUROPEAN PATENT SPECIFICATION

(11) **EP 1 958 819 B1**
(45) Date of publication and mention of the grant of the patent: **16.09.2009**
(21) Application number: 08154105.4
(22) Date of filing: 21.04.2006
(51) Int. Cl.: B60P 1/28, B65D 88/12

(54) **Container with lateral walls for a vehicle**
Behälter mit Seitenwänden für ein Fahrzeug
Récipient à parois latérales pour véhicule

(43) Date of publication of application: 20.08.2008
(62) Divisional of application: 06112946.6
(73) Proprietor: Konstruktiewerkhuizen STAS N.V., 8790 Waregem (BE)
(72) Inventor: Heyse, Francis, 9750 Huise - Zingern (BE)
(74) Representative: Callewaert, Koen

(56) References cited:
- EP-A- 0 179 962
- FR-A- 1 464 476
- US-A- 4 273 381

## Description

The invention concerns a container for a vehicle with two lateral walls which comprise standing side plates that extend between the front side and the rear side of the container, such that the distance between the lower edges of the side plates on the front side of the container is smaller than the distance between these lower edges on the rear side of the container.

A container of this kind is known from FR 1464476 A.

According to the present state of the art, such containers are made of rectangular metal plates which are fixed to each other by means of metal struts and which are reinforced with cross metal struts or beams.

A conventional container, as described for example in European patent EP 0 179 962, consists of a rectangular bottom plate which is reinforced on the lower side with cross ribs. On two opposite parallel edges of the bottom plate are laterally fixed two base struts. On these lateral base struts are fixed two standing side plates which are in turn reinforced with standing ribs.

The weight and also the cost of a container largely depends on the amount of metal used. In order to reduce the weight of the container, light materials such as aluminium are used.

To this aim, containers with a bent bottom and side walls are made as well. These so-called round containers are advantageous in that less reinforcement struts are required for their construction, so that they can be made lighter and less expensive. Moreover, the round shape of the container allows for a very simple and smooth emptying when tipping it over.

Round containers are disadvantageous, however, in that their loading volume is smaller in comparison to that of straight containers and in that they are less durable as the centre or lower part of the bent bottom plate is more liable to wear in comparison with the bottom plate of a conventional straight container.

The invention aims to remedy these disadvantages by providing a container which can be emptied in a very simple and smooth manner when being tipped over and which moreover is light, solid, durable and is easy to construct with a minimum of heavy reinforcement struts in comparison to the existing conventional containers.

To this aim, each of the standing side plates of the container is formed of a longitudinal plate in which is provided at least one fold which extends over the entire length of the side plate, such that the vertical projection of a straight line extending along the upper edge and the vertical projection of a straight line extending along the lower edge of the side plate cross each other, and whereby these side plates have top edges which are parallel to one another.

Preferably, the container has two base struts which are fixed to a bottom plate with two opposite edges, wherein the base struts extend along each of these two edges between the front side and the rear side of the container and wherein said side plates are each fixed to one of the base struts. The distance between both base struts on the front side of the container is smaller than the distance between the base struts on the rear side of the container.

Practically, the base struts partly overlap the bottom plate on said edges, and the overlap is larger on the front side of the container than on the rear side of the container.

In an advantageous manner, the base struts have a first flange extending parallel to said bottom plate and resting at least partly on the latter.

In a particularly advantageous manner, the bottom plate rests between said first flange and a second flange of each of the base struts. The first flange hereby preferably extends up to a smaller distance from the corresponding edge of the bottom plate than the second flange.

According to a special embodiment of the container according to the invention, two standing side plates extend between the front side and the rear side of the container, whereby they are each fixed to one of the base struts and have top edges that are parallel to each other.

According to a preferred embodiment of the invention, each of the standing side plates is made from a longitudinal metal plate whose long sides are parallel and in which is provided at least one fold extending over the entire length of the side plate. This fold makes sure that the bottom and top edge of the side plates cross such that, after the side plates have been mounted on the base struts, their lower edges connect to the base struts and the top edges of the side plates are parallel to each other.

According to an interesting embodiment of the container according to the invention, the standing side plates have each an upper part which connects to the parallel top edge of the corresponding side plate and which is practically at right angle to an upper surface formed by the top edges of both side plates.

The invention also concerns a method for manufacturing such a container.

Other particularities and advantages of the invention will become clear from the following description of a preferred embodiment of a container and a method for manufacturing this container according to the invention; this description is given as an example only and does not restrict the scope of the claimed protection in any ways; the figures of reference used hereafter refer to the accompanying drawings.
Figure 1 is a side elevation of a preferred embodiment of a tilting container which is mounted on a semi-trailer.
Figure 2 is a side elevation of this container on the semi-trailer in a tipping position.
Figure 3a is a schematic cross section according to line I-I in figure 2 of the bottom plate and two longitudinal base struts on the front side of this container.
Figure 3b is a schematic cross section according to line II-II in figure 2 of the bottom plate and two longitudinal base struts on the rear side of this container.
Figure 4 is a schematic representation of a bottom view in perspective with a partial cross section according to line I-I in figure 2 of the bottom plate and a longitudinal base strut on the front side of this container.
Figure 5 is a schematic representation of a bottom view in perspective with a partial cross section according to line II-II in figure 2 of the bottom plate and a longitudinal base strut on the rear side of this container.
Figure 6 is a schematic representation of a cross section according to line III-III in figure 2 of this container, in particular of the bottom plate with two longitudinal base struts and two side plates and two angle steels thereon.
Figure 7 is a schematic representation in perspective of this container, in particular of the bottom plate with two longitudinal base struts and two side plates thereon.
Figure 8 is a rear view of two side plates standing opposite each other.
Figure 9 is a side elevation of a side plate.
Figure 10 is a view in perspective of two side plates standing opposite each other.
Figure 11 is a side elevation of this container.
Figure 12 is a bottom view in perspective of this container.
Figure 13 is a rear view of this container.
Figure 14 is a top view in perspective of this container.
Figure 15 is a front view of this container.

In the different drawings, the same reference figures refer to identical or analogous elements.

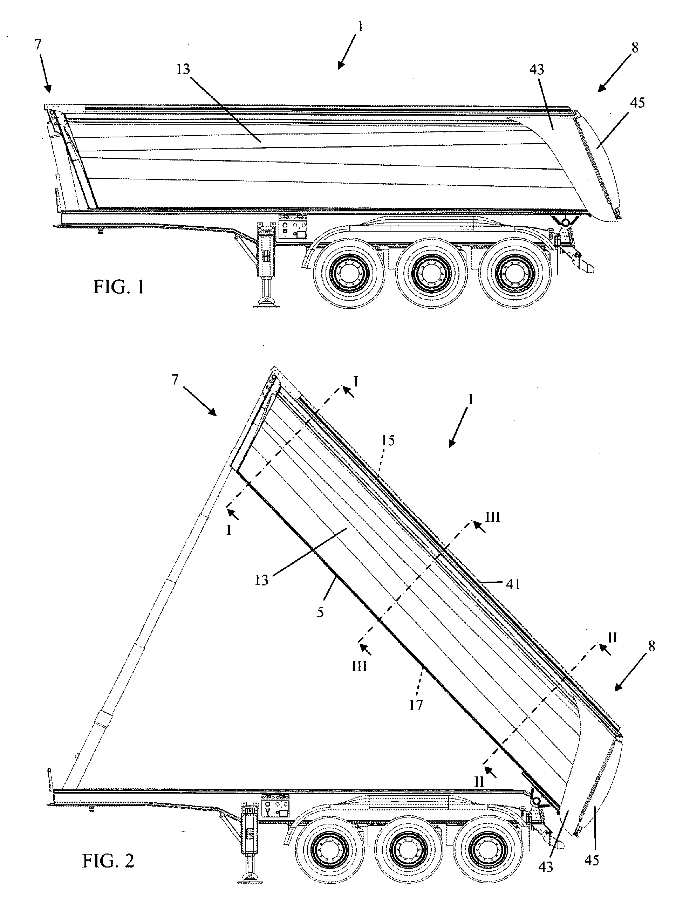

The invention concerns a container 1 of a vehicle, such as for example a lorry, a trailer or a semi-trailer. Figures 1 and 2 represent a container 1 mounted on a semi-trailer and comprising a bottom plate 2 with two opposite, practically parallel longitudinal edges along which two base struts are fixed to the bottom plate 2, such that these base struts extend between the front side 7 and the rear side 8 of the container 1 on either side of the bottom plate 2. Further, this container 1 has two standing walls formed of what are called side plates 13 and 14 which are fixed to the base struts and which also extend between the front side 7 and the rear side 8 of the container 1.

According to the invention, the distance between the base struts on the front side 7 of the container is smaller than the distance between these base struts on the rear side 8 of the container 1. As a result, the bottom of the container 1 gradually widens as of the front side 7 to the rear side 8.

Since a bucket is particularly preferred, we will only refer to such an embodiment hereafter.

When tipping over the container 1, as represented in figure 2, the front side, as indicated by arrow 7, is raised in relation to the rear side, as indicated by arrow 8, as is the case with a conventional tilting container, and a load situated in the container 1 will shift to the rear side 8 due to the gravitational force. As the container 1 according to the invention is wider on the rear side 8 than on the front side 7, emptying the container 1 via this rear side 8 will be quicker and simpler than with a container whose side walls are parallel. More particularly, there is less chance that bulk material of the container's load will stay behind in the latter when it is tipped over.

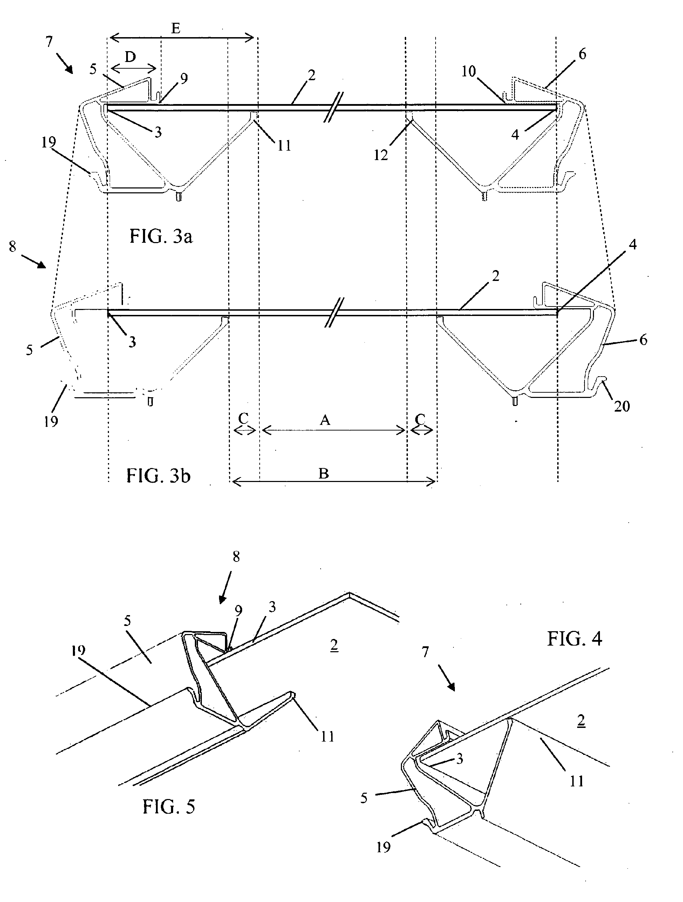

According to a preferred embodiment of the invention, the bottom of the container 1 is formed of a rectangular metal bottom plate 2 having two almost parallel longitudinal edges 3 and 4 as represented in figures 3a and 3b.

Over each of these edges 3 and 4 is pushed a metal base strut 5 and 6 respectively in such a manner that on the front side 7 of the container 1, the distance A between the base struts 5 and 6 is smaller than the distance B between these base struts 5 and 6 on the rear side 8 of the container 1. As a result, the base struts 5 and 6 on the rear side 8 of the container 1 will shift over a distance C from the parallel edges 3 and 4 respectively in relation to the front side 7 of the container 1, as is also represented in figures 4 and 5. Consequently, the base struts 5 and 6 partly overlap the bottom plate 2 on the edges 3 and 4 respectively thereof, and this overlap is larger on the front side 7 than on the rear side 8.

The different parts of the container 1 are fixed to each other by means known as such, such as for example bolts and/or welds. The struts 5 and 6 are preferably welded to the bottom plate 2 over practically their entire length.

Thus, the bottom plate 2 and the base struts 5 and 6 form the lower side of the container 1 which has the shape of a practically isosceles trapezium whose hypotenuses extend between the front side 7 and the rear side 8 of the container 1, whose short parallel side is situated on the front side 7 of the container 1 and whose long parallel side is situated on the rear side 8 of the container 1.

Each of the base struts 5 and 6 has a first flange 9 and 10 respectively extending parallel to the bottom plate 2 and resting thereon on the one hand, and a second flange 11 and 12 respectively, extending parallel to the bottom plate 2 as well and upon which the bottom plate 2 rests. As a consequence, the bottom plate 2 is situated between the two flanges 9, 11 and 10, 12 of each of the base struts 5 and 6, in such a manner that the first flanges 9 and 10 are situated on the top side of the bottom plate 2, whereas the second flanges 11 and 12 are situated on the lower side of the bottom plate 2.

The bottom plate 2 rests on the free end of the second flanges 11 and 12 and is fixed thereto over the entire length thereof by means of a weld.

Further, as also indicated in figure 3a, each above-mentioned first flange 9 and 10 extends on the top side of the bottom plate 2 over a distance D as of the corresponding edge 3 and 4 respectively of the bottom plate 2. This distance D is smaller than the distance E between the far end of the second flange 11 and 12 respectively and the corresponding edge 3 and 4 respectively of the bottom plate 2 situated in the vicinity.

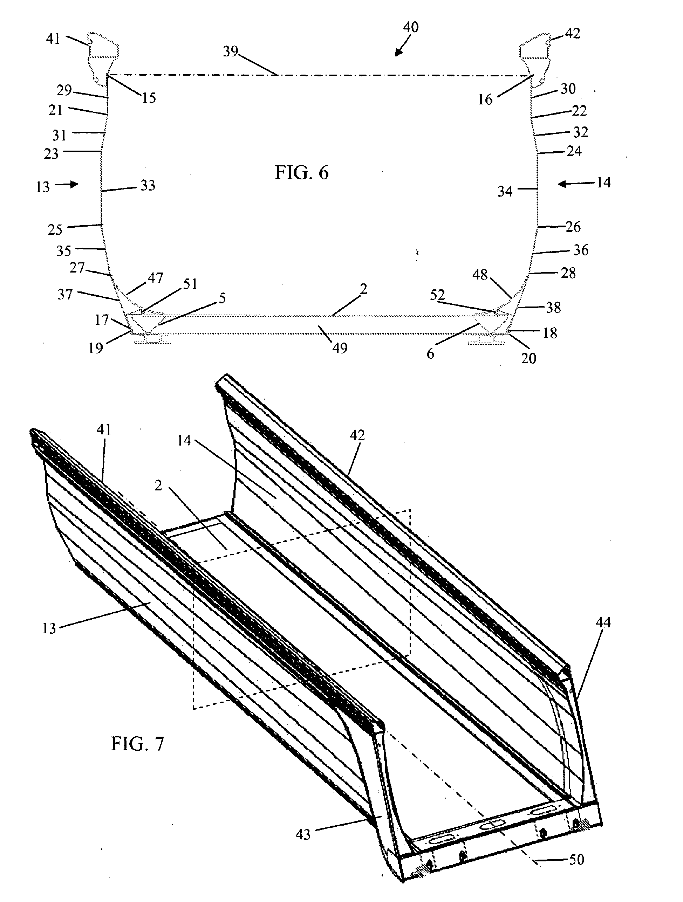

According to this preferred embodiment of the invention, two opposite standing side plates 13 and 14 extend between the front side 7 and the rear side 8 of the container 1, which are each fixed to one of the base struts 5 and 6, as represented in figures 6 and 7.

The top edges 15 and 16 of the standing side plates 13 and 14 respectively are parallel to each other, whereas the corresponding lower edges 17 and 18 connect to a flange 19 and 20 respectively of the corresponding base struts 5 and 6.

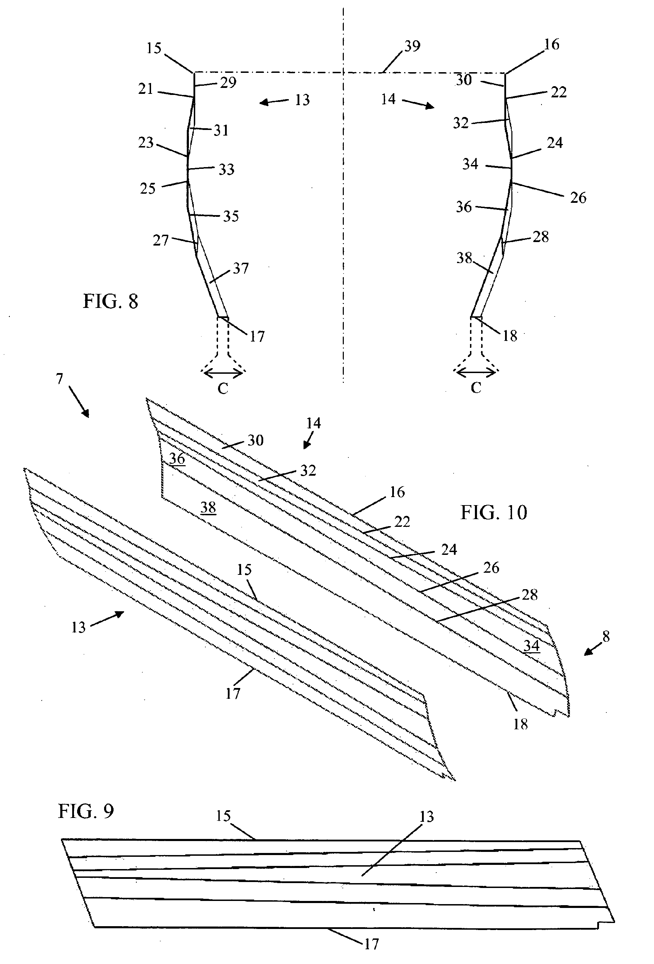

Consequently, the upper edges 15 and 16 of the side plates 13 and 14 respectively and the corresponding lower edges 17 and 18 extend according to two lines whose vertical projections cross one another. This can be derived for the upper edge 15 and the lower edge 17 from a rear view and a side view of the side plate 13 represented in figures 8 and 9.

To this end, each of the side plates 13 and 14 is formed of a metal plate, two long sides of which are parallel to each other, such as for example a rectangular plate.

Over the entire length of the side plate 13 are provided four folds 21, 23, 25 and 27, as a result of which it has five discernable surfaces 29, 31, 33, 35 and 37 which extend over the entire length of the side plate 13, as is also represented in figures 9 and 10.

The opposite side plate 14 forms practically the mirrored image of the side plate 13 and, consequently, is built in an analogous manner with four folds 22, 24, 26 and 28 over the entire length of the plate and five discernable surfaces 30, 32, 34, 36 and 38 which also extend over the entire length of the side plate 14.

Thus, the walls of the container 1 are manufactured in a very simple manner, and they must not be provided with standing reinforcement ribs. This makes sure that a very light construction is obtained.

The topmost surfaces 29 and 30 respectively of the side plates 13 and 14 are adjacent to the upper surface 39, which is formed of the two parallel top edges 15 and 16 of the side plates 13 and 14, and they stand practically at right angles to the latter.

The standing side plates 13 and 14 on the rear side 8 of the container 1 are practically as high as on the front side 7 thereof, such that the upper surface 39 is practically parallel to the bottom plate 2.

Since the top edges 15 and 16 of the standing side plates 13 and 14 are parallel to each other, the open upper side 40 in the upper surface 39 of the container 1 forms a rectangle. As the topmost surfaces 29 and 30 respectively of the side plates 13 and 14 are at right angles to the upper surface 39, the upper part of the container 1 is practically beam-shaped, such as is the case with a conventional container. Consequently, the thus formed open upper side 40 can be covered by means of a rectangular seal if required.

The top edges 15 and 16 of the standing side plates 13 and 14 are further provided with reinforcement struts 41 and 42 extending over the entire length of the side plates 13 and 14, as represented in figures 6 and 7. The rear side 8 of the container 1 is provided with two strengthening beams 43 and 44 which are fastened to the side plates 13 and 14.

The surface 33 is separated from the surface 29 lying on top of it by the surface 31. Just as the surface 29, the surface 33 of the side plate 13 also extends at right angles to the above-mentioned upper surface 39. In an analogous manner, the surface 34 of the side plate 14 also extends at right angles to the upper surface 39.

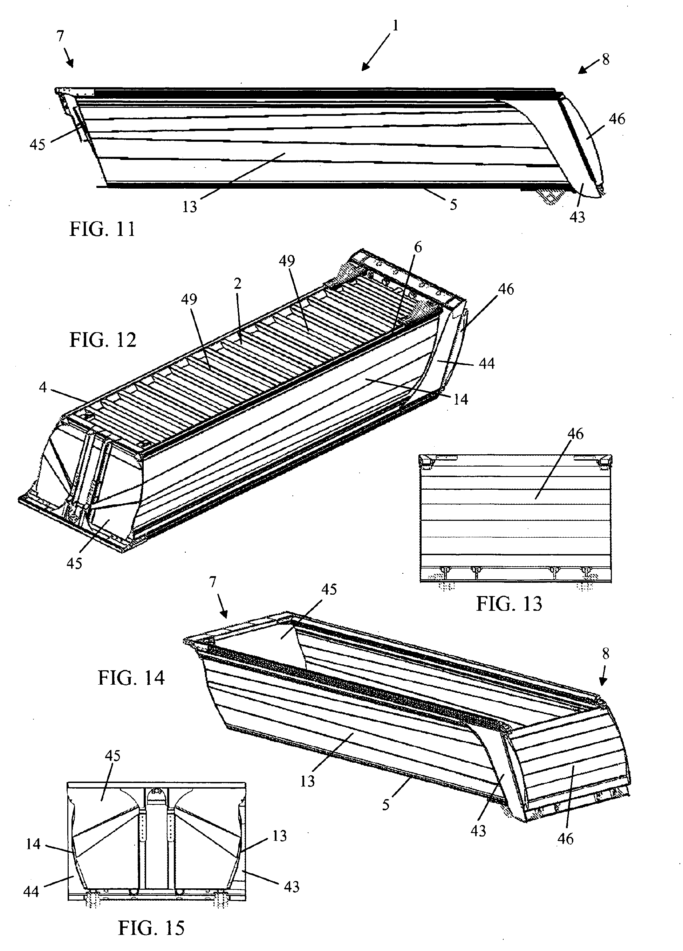

Further, the front side 7 of the container 1 is provided with a front bulkhead 45 which is attached to the side plates 13 and 14 and the bottom plate 2, and the rear side 8 is provided with a loading flap 46, as represented in figures 11, 12, 13, 14 and 15.

On the inside of the container 1, the angle between the bottom plate 2 and each of the side plates 13 and 14 is bridged by a bent, strip-shaped plate 47 and 48 respectively, extending over practically the entire length of the base struts 5 and 6.

The bent plates 47 and 48 are fixed to the bottom plate 2 with an edge thereof, whereas the opposite edge thereof is fixed to the corresponding side plate 13 or 14. On the round, lower side of this bent plate 47 and 48 is provided a rib 51 and 52 over the entire length thereof which rests on the base strut 5 or 6 situated underneath it. Thus, these bent plates 47 and 48 provide for a gradual transition between the side plates 13 and 14 and the bottom plate 2. Possibly, the bent plates 47 and 48 and the base struts 5 and 6 respectively are made of one piece.

The bottom plate 2 is supported by parallel supporting beams 49 which extend between the base struts 5 and 6 of the bottom of the container 1, as represented in figure 12. The far ends of these supporting beams 49 are bevelled, such that they fit to said second flange 11 and 12 of each of the base struts 5 and 6.

The invention also concerns a method for manufacturing a container 1. According to this method, two base struts 5 and 6 are pushed over the edges 3 and 4 respectively of a metal bottom plate 2 with a rectangular shape, such that the distance between the base struts 5 and 6 in the longitudinal direction of the bottom plate 2 increases as of the front side 7 of the container 1 to the rear side 8. Hereby, one has to make sure that first flanges 9 and 10 of said base struts 5 and 6 preferably overlap the bottom plate 2 at least partly.

Before the side walls are fixed to the base struts 5 and 6, a bent plate 47 and 48 may be optionally fixed to each of the base struts 5 and 6 as described above.

The side walls of the container 1 are made from longitudinal, flat metal plates whose long lateral edges are parallel. Preferably, these are almost rectangular plates.

In the metal plates are provided folds extending over the entire length of the plates, such that said longitudinal edges are no longer parallel. At least one of these folds is not parallel to the longitudinal edges of the plates.

In particular, the plates are folded such that the angle between the lateral edges thereof is practically equal to the angle between the base struts 5 and 6 and the longitudinal axis of symmetry 50 of the bottom plate 2.

The thus obtained side plates, which form the side walls, are fixed to the base struts 5 and 6.

According to this method, successive supporting beams 49 are further provided parallel to each other between the base struts 5 and 6 against the lower side of the bottom plate 2 and practically crosswise to the base struts 5 and 6 in a manner known to the tradesman. On the front side 7 of the container 1 is mounted a front bulkhead 45 which can be provided with a piston for tipping over the container 1. On the rear side 8 is provided a loading flap 46 with a coping stone and a hinge.

According to an alternative embodiment of the container according to the invention, which is not represented in the figures, the side plates 13 and 14 are mounted on the base struts 5 and 6 via a standing intermediate strut which is fixed to the base struts 5 and 6. This makes it possible for the side plates 13 and 14 to be fixed, for example, to the bent plates 47 and 48.

According to another variant of the preferred embodiment of the container, which is not represented in the figures, the side plates 13 and 14 have only one fold which is provided over the entire length of the side plate.

According to yet another variant of the preferred embodiment which is not represented in the figures, the side plates 13 and 14 have a number of continuous bends instead of the above-mentioned folds.

Naturally, the invention is not restricted to the above-described method and the device represented in the accompanying drawings.

Thus, for example, the height of the standing side plates 13 and 14 on the rear side 8 may vary in relation to the height on the front side 7 of the container 1, such that the upper surface 39 is positioned slantingly in relation to the bottom plate 2.

Thus, for example, the base strut 5 and 6 and the bent plates 47 and 48 respectively can be made of one piece.

Thus, the discernable surfaces 29 and 30, 31 and 32, 33 and 34, 35 and 36, 37 and 38 of the side plates 13 and 14 can be either bent or straight.

## Claims

1. Container (1) for a vehicle with two lateral walls which comprise standing side plates (13, 14) that extend between the front side (7) and the rear side (8) of the container (1), such that the distance (A) between the lower edges (17, 18) of the side plates (13, 14) on the front side (7) of the container (1) is smaller than the distance (B) between these lower edges (17, 18) on the rear side (8) of the container (1), **characterised in that** each of the standing side plates (13, 14) is formed of a longitudinal plate in which is provided at least one fold (21, 22, 23, 24, 25, 26, 27, 28) which extends over the entire length of the side plate (13, 14), such that the vertical projection of a straight line extending along the upper edge (15, 16) and the vertical projection of a straight line extending along the lower edge (17, 18) of the side plate (13, 14) cross each other, and whereby these side plates (13, 14) have top edges which are parallel to one another.

2. Container according to claim 1, wherein the standing side plates (13, 14) have each a surface (29, 30) which connects to the top edge (15, 16) of the corresponding side plate (13, 14) and which stands at right angle to the upper surface (39) which comprises the top edges (15, 16) of both side plates.

3. Container according to claim 2, whereby each side plate (13, 14) has at least four folds (21, 22, 23, 24, 25, 26, 27, 28) which extend over the entire length of the side plate (13, 14), such that this side plate (13, 14) has two surfaces (29, 30, 33, 34) which extend over the entire length of the side plate (13, 14) and which stand at right angles to said upper surface (39).

4. Container according to any of claims 1 to 3, wherein it has a rectangular, open upper side (40) which is practically parallel to a bottom plate (2) of the container (1).

5. Container according to any of claims 1 to 4, wherein each of the standing side plates (13, 14) is formed from a longitudinal plate of which two long edges are parallel.

6. Container according to any of claims 1 to 5, wherein the container (1) has two base struts (5, 6) which are fixed to a bottom plate (2) with two opposite edges and which base struts (5,6) extend along each of these two edges (3, 4) between a front side (7) and a rear side (8) of the container (1),
wherein the distance (A) between both base struts (5, 6) on the front side (7) of the container (1) is smaller than the distance (B) between the base struts (5, 6) on the rear side (8) of the container (1),
wherein said side plates (13, 14) are each fixed to one of the base struts (5, 6).

7. Container according to claim 6, whereby each of the standing side plates (13, 14) has a lower edge (17, 18) which runs almost parallel to the corresponding base strut (5, 6) onto which the side plate (13, 14) is fixed.

8. Container according to claim 6 or 7, whereby the lower edge (17, 18) of each of the standing side plates (13, 14) connects to a flange (19, 20) of the corresponding base strut (5, 6) onto which the side plate (13, 14) is fixed.

9. Container according to claim 6 or 7, whereby each of the standing side plates (13, 14) is fixed to the corresponding base strut (5, 6) via an intermediate strut.

10. Container to any of claims 6 to 9, wherein said bottom plate (2) has two opposite edges (3, 4) which are practically parallel.

11. Container according to any of claims 6 to 10, whereby said base struts (5, 6) partly overlap the bottom plate (2) at said edges (3, 4), and whereby the overlap is larger on the front side (7) of the container (1) than on the rear side (8) of the container (1).

12. Container according to any of claims 6 to 11, whereby said base struts (5, 6) have a flange (9, 10) which extends parallel to said bottom plate (2) and rests at least partly on the latter.

13. Method for manufacturing a container (1) with a lower side in the shape of an isosceles trapezium and an upper side (40) in the shape of a rectangle, whereby
- two base struts (5, 6) are mounted on either side of a preferably flat bottom plate (2) with two edges (3,4) by pushing them over the edges (3, 4) of the bottom plate (2) and fixing them to the latter, such that the distance (A) between the base struts (5, 6) on the front side (7) of the container (1) is smaller than the distance (B) between these base struts (5, 6) on the rear side (8) of the container (1)
- two side plates (13, 14) are fixed to the base struts (5, 6) with their lower edges (17, 18) parallel to the latter, whereby these side plates (13, 14) are formed from a preferably rectangular, flat plate in which is provided at least one fold over the entire length thereof, such that when the lower sides (17, 18) of the side plates (13, 14) are fixed parallel to the base struts (5, 6), the upper sides (15, 16) of both side plates (13, 14) are parallel to each other.

14. Side plate (13, 14) for a container (1) according to any one of claims 1 to 12.

15. Vehicle which is provided with a container (1) according to any one of claims 1 to 12.

## Patentansprüche

1. Container (1) für ein Fahrzeug mit zwei Seitenwänden, die stehende Seitenplatten (13, 14) umfassen, die sich zwischen der Vorderseite (7) und der Rückseite (8) des Containers (1) erstrecken, so dass die Distanz (A) zwischen den unteren Rändern (17, 18) der Seitenplatten (13, 14) an der Vorderseite (7) des Containers (1) kleiner ist als die Distanz (B) zwischen diesen unteren Rändern (17, 18) an der Rückseite (8) des Containers (1), **dadurch gekennzeichnet, dass** jede der stehenden Seitenplatten (13, 14) aus einer langgestreckten Platte gebildet ist, in der mindestens ein Falz (21, 22, 23, 24, 25, 26, 27, 28) gebildet ist, der sich über die gesamte Länge der Seitenplatte (13, 14) erstreckt, so dass die vertikale Projektion einer geraden Linie, die sich entlang dem oberen Rand (15, 16) erstreckt, und die vertikale Projektion einer geraden Linie, die sich entlang dem unteren Rand (17, 18) der Seitenplatten (13, 14) erstreckt, einander kreuzen, und wobei diese Seitenplatten (13, 14) obere Ränder (15, 16) aufweisen, die parallel zueinander sind.

2. Container nach Anspruch 1, wobei die stehenden Seitenplatten (13, 14) jeweils eine Fläche (29, 30) aufweisen, die an den oberen Rand (15, 16) der entsprechenden Seitenplatte (13, 14) anschließt und die im rechten Winkel zu der oberen Fläche (39) steht, die die oberen Ränder (15, 16) der beiden Seitenplatten einschließt.

3. Container nach Anspruch 2, wobei jede Seitenplatte (13, 14) mindestens vier Falze (21, 22, 23, 24, 25, 26, 27, 28) umfasst, die sich über die gesamte Länge der Seitenplatte (13, 14) erstrecken, so dass diese Seitenplatte (13, 14) zwei Flächen (29, 30, 33, 34) aufweist, die sich über die gesamte Länge der Seitenplatte (13, 14) erstrecken und die in rechten Winkeln zu der oberen Fläche (39) stehen.

4. Container nach einem der Ansprüche 1 bis 3, wobei er eine rechteckige, offene Oberseite (40) umfasst, die praktisch parallel zu einer Bodenplatte (2) des Containers (1) ist.

5. Container nach einem der Ansprüche 1 bis 4, wobei jede der stehenden Seitenplatten (13, 14) durch eine langgestreckte Platte gebildet wird, von der zwei lange Ränder parallel sind.

6. Container nach einem der Ansprüche 1 bis 5, wobei der Container (1) zwei Basisstreben (5, 6) aufweist, die an einer Bodenplatte (2) mit zwei entgegengesetzten Rändern befestigt sind, und wobei sich die Basisstreben (5, 6) entlang von jedem dieser zwei Ränder (3, 4) zwischen einer Vorderseite (7) und einer Rückseite (8) des Containers (1) erstrecken,
wobei die Distanz (A) zwischen den beiden Basisstreben (5, 6) an der Vorderseite (7) des Containers (1) kleiner ist als die Distanz (B) zwischen den Basisstreben (5, 6) an der Rückseite (8) des Containers (1),
wobei die Seitenplatten (13, 14) jeweils an einer der Basisstreben (5, 6) befestigt sind.

7. Container nach Anspruch 6, wobei jede der stehenden Seitenplatten (13, 14) einen unteren Rand (17, 18) aufweist, der fast parallel zu der entsprechenden Basisstrebe (5, 6) verläuft, an der die Seitenplatte (13, 14) befestigt ist.

8. Container nach Anspruch 6 oder 7, wobei der untere Rand (17, 18) jeder der stehenden Seitenplatten (13, 14) an einen Flansch (19, 20) der entsprechenden Basisstrebe (5, 6) anschließt, an der die Seitenplatte (13, 14) befestigt ist.

9. Container nach Anspruch 6 oder 7, wobei jede der stehenden Seitenplatten (13, 14) über eine Zwischenstrebe an der entsprechenden Basisstrebe (5, 6) befestigt ist.

10. Container nach einem der Ansprüche 6 bis 9, wobei die Bodenplatte (2) zwei entgegengesetzte Ränder (3, 4) aufweist, die praktisch parallel sind.

11. Container nach einem der Ansprüche 6 bis 10, wobei die Basisstreben (5, 6) die Bodenplatte (2) an den Rändern (3, 4) teilweise überlappen und wobei die Überlappung an der Vorderseite (7) des Containers (1) breiter ist als an der Rückseite (8) des Containers (1).

12. Container nach einem der Ansprüche 6 bis 11, wobei die Basisstreben (5, 6) einen Flansch (9, 10) aufweisen, der sich parallel zur Bodenplatte (2) erstreckt und mindestens teilweise auf der Letztgenannten ruht.

13. Verfahren zur Herstellung eines Containers (1) mit einer Unterseite in der Form eines gleichschenkeligen Trapezes und einer Oberseite (40) in der Form eines Rechtecks, wobei
- zwei Basisstreben (5, 6) an beiden Seiten einer vorzugsweise ebenen Bodenplatte (2) mit zwei Rändern (3, 4) montiert werden, indem sie über die Ränder (3, 4) der Bodenplatte (2) geschoben werden und an der Letztgenannten derart befestigt werden, dass die Distanz (A) zwischen den Basisstreben (5, 6) an der Vorderseite (7) des Containers (1) kleiner ist als die Distanz (B) zwischen diesen Basisstreben (5, 6) an der Rückseite (8) des Containers (1) ;
- zwei Seitenplatten (13, 14) an den Basisstreben (5, 6) derart befestigt werden, dass ihre unteren Ränder (17, 18) parallel zu den Letztgenannten sind, wobei diese Seitenplatten (13, 14) aus einer vorzugsweise rechteckigen, ebenen Platte gebildet werden, in der mindestens ein Falz über ihre gesamte Länge vorgesehen ist, so dass, wenn die Unterseiten (17, 18) der Seitenplatten (13, 14) parallel zu den Basisstreben (5, 6) befestigt werden, die Oberseiten (15, 16) der beiden Seitenplatten (13, 14) parallel zueinander sind.

14. Seitenplatte (13, 14) für einen Container (1) nach einem der Ansprüche 1 bis 12.

15. Fahrzeug, das mit einem Container (1) nach einem der Ansprüche 1 bis 12 versehen ist.

## Revendications

1. Conteneur (1) pour un véhicule comprenant deux parois latérales qui comprennent des plaques latérales verticales (13, 14) qui s'étendent entre le côté avant (7) et le côté arrière (8) du conteneur (1), de telle sorte que la distance (A) entre les bords inférieurs (17, 18) des plaques latérales (13, 14) sur le côté avant (7) du conteneur (1) soit inférieure à la distance (B) entre ces bords inférieurs (17, 18) sur le côté arrière (8) du conteneur (1) **caractérisé en ce que** chacune des plaques latérales verticales (13, 14) est constituée d'une plaque longitudinale dans laquelle au moins un pli est formé (21, 22, 23, 24, 25, 26, 27, 28) qui s'étend sur la totalité de la longueur de la plaque latérale (13, 14), de telle sorte que la saillie verticale d'une ligne droite s'étendant le long du bord supérieur (15, 16) et la saillie verticale d'une ligne droite s'étendant le long du bord inférieur (17, 18) de la plaque latérale (13, 14) se croisent et dans lequel ces plaques latérales (13, 14) présentent des bords supérieurs qui sont parallèles les uns aux autres.

2. Conteneur selon la revendication 1, dans lequel chacune des plaques latérales verticales (13, 14) présente une surface (29, 30) qui est reliée aux bords supérieurs (15, 16) des plaques latérales correspondantes (13, 14) et qui s'étend perpendiculairement à la surface supérieure (39) qui comprend les bords supérieurs (15, 16) des deux plaques latérales.

3. Conteneur selon la revendication 2, dans lequel chacune des plaques latérales (13, 14) comprend au moins quatre plis (21, 22, 23, 24, 25, 26, 27, 28) qui s'étendent sur la totalité de la longueur de la plaque latérale (13, 14), de telle sorte que cette plaque latérale (13, 14) présente deux surfaces (29, 30, 33, 34) qui s'étendent sur la totalité de la longueur de la plaque latérale (13, 14) et qui s'étendent perpendiculairement à ladite surface supérieure (39).

4. Conteneur selon l'une quelconque des revendications 1 à 3, dans lequel il comprend un côté supérieur ouvert rectangulaire (40) qui est pratiquement parallèle à une plaque inférieure (2) du conteneur (1).

5. Conteneur selon l'une quelconque des revendications 1 à 4, dans lequel chacune des plaques latérales verticales (13, 14) est constituée d'une plaque longitudinale dont deux bords longs sont parallèles.

6. Conteneur selon l'une quelconque des revendications 1 à 5, dans lequel le conteneur (1) comprend deux entretoises de base (5, 6) qui sont fixées à une plaque inférieure (2) avec deux bords opposés (3, 4), les entretoises de base (5, 6) s'étendant le long de chacun de ces deux bords (3, 4) entre un côté avant (7) et un côté arrière (8) du conteneur (1), dans lequel la distance (A) entre les deux entretoises de base (5, 6) sur le côté avant (7) du conteneur (1) est inférieure à la distance (B) entre les entretoises de base (5, 6) sur le côté arrière (8) du conteneur (1), dans lequel chacune desdites plaques latérales (13, 14) est fixée à l'une des entretoises de base (5,6).

7. Conteneur selon la revendication 6, dans lequel chacune des plaques latérales verticales (13, 14) présente un bord inférieur (17, 18) qui s'étend pratiquement parallèlement à l'entretoise de base correspondante (5, 6) sur laquelle la plaque latérale (13, 14) est fixée.

8. Conteneur selon la revendication 6 ou 7, dans lequel le bord inférieur (17, 18) de chacune des plaques latérales verticales (13, 14) est relié à une aile (19, 20) de l'entretoise de base correspondante (5, 6) sur laquelle la plaque latérale (13, 14) est fixée.

9. Conteneur selon la revendication 6 ou 7, dans lequel chacune des plaques latérales verticales (13, 14) est fixée à l'entretoise de base correspondante (5, 6) par une entretoise intermédiaire.

10. Conteneur selon l'une quelconque des revendications 6 à 9, dans lequel ladite plaque inférieure (2) comprend deux bords opposés (3, 4) qui sont pratiquement parallèles.

11. Conteneur selon l'une quelconque des revendications 6 à 10, dans lequel lesdites entretoises de base (5, 6) recouvrent partiellement la plaque inférieure (2) auxdits bords (3, 4), et dans lequel le recouvrement est plus important sur le côté avant (7) du conteneur (1) que sur le côté arrière (8) du conteneur (1).

12. Conteneur selon l'une quelconque des revendications 6 à 11, dans lequel lesdites entretoises de base (5, 6) comportent une aile (9, 10) qui s'étend parallèlement à ladite plaque inférieure (2) et qui repose au moins partiellement sur cette dernière.

13. Procédé de fabrication d'un conteneur (1) présentant un côté inférieur en forme de trapèze isocèle, et un côté supérieur (40) en forme de rectangle, dans lequel:
- deux entretoises de base (5, 6) sont montées de part et d'autre d'une plaque inférieure de préférence plate (2) présentant deux bords (3, 4) en poussant celles-ci sur les bords (3, 4) de la plaque inférieure (2) et les fixant à celle-ci, de telle sorte que la distance (A) entre les entretoises de base (5, 6) sur le côté avant (7) du conteneur (1) soit inférieure à la distance (B) entre ces entretoises de base (5, 6) sur le côté arrière (8) du conteneur (1); et
- deux plaques latérales (13, 14) sont fixées aux entretoises de base (5, 6) avec leurs bords inférieurs (17, 18) parallèles à celles-ci, dans lequel lesdites plaques latérales (13, 14) sont constituées d'une plaque plate de préférence rectangulaire dans laquelle au moins un pli est formé sur la totalité de la longueur de celle-ci, de telle sorte que lorsque les côtés inférieurs (17, 18) des plaques latérales (13, 14) sont fixés parallèlement aux entretoises de base (5, 6), les côtés supérieurs (15, 16) des deux plaques latérales (13, 14) soient parallèles l'un à l'autre.

14. Plaque latérale (13, 14) pour un conteneur (1) selon l'une quelconque des revendications 1 à 12.

15. Véhicule équipé d'un conteneur (1) selon l'une quelconque des revendications 1 à 12.
